(19) **Europäisches Patentamt European Patent Office Office européen des brevets**

(11) **EP 4 786 214 A1**

(12) **EUROPEAN PATENT APPLICATION**
published in accordance with Art. 153(4) EPC

(43) Date of publication:
05.08.2026 Bulletin 2026/32

(21) Application number: 24881394.1

(22) Date of filing: 08.10.2024

(51) International Patent Classification (IPC):
**B60G 17/015** (2006.01)

(52) Cooperative Patent Classification (CPC):
**B60G 17/015; B60G 17/0165**

(86) International application number:
**PCT/CN2024/123485**

(87) International publication number:
**WO 2025/087028 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.10.2023 CN 202311398912

(71) Applicant: Yinwang Intelligent Technologies Co., Ltd.
**Shenzhen, Guangdong 518110 (CN)**

(72) Inventors:
• **LV, Xiaoyu**
  **Shenzhen, Guangdong 518129 (CN)**
• **MA, Sha**
  **Shenzhen, Guangdong 518129 (CN)**
• **HAN, Ronglei**
  **Shenzhen, Guangdong 518129 (CN)**
• **LIU, Xuanzeng**
  **Shenzhen, Guangdong 518129 (CN)**

(74) Representative: **Pfenning, Meinig & Partner mbB Patent- und Rechtsanwälte Theresienhöhe 11a 80339 München (DE)**

(54) **VEHICLE SUSPENSION CONTROL METHOD AND APPARATUS**

(57) A vehicle suspension control method and an apparatus are disclosed. The method includes: controlling a vehicle light of a vehicle to project a light spot onto a road surface (S201); obtaining an image of the road surface captured by an image capture apparatus of the vehicle (S202); and controlling a status parameter of a vehicle suspension based on the image (S203). A road surface condition is detected through cooperation between the vehicle light and the image capture apparatus, so that a problem of inaccurate road surface identification in a dark light scenario or in scenarios, such as a road section lacking texture features and a road surface with frequent unevenness in a small range, can be resolved, thereby improving accuracy of suspension adjustment, driving safety, and ride comfort.

S201

| Control a vehicle light of a vehicle to project a light spot onto a road surface |
| --- |

↓

S202

| Obtain an image of the road surface captured by an image capture apparatus of the vehicle |
| --- |

↓

S203

| Control a status parameter of a vehicle suspension based on the image |
| --- |

FIG. 2

**Description**

CROSS-REFERENCE TO RELATED APPLICATIONS

This application claims priority to Chinese Patent Application No. 202311398912.4, filed with the China National Intellectual Property Administration on October 25, 2023 and entitled "VEHICLE SUSPENSION CONTROL METHOD AND APPARATUS", which is incorporated herein by reference in its entirety.

TECHNICAL FIELD

This application relates to the field of intelligent vehicles, and in particular, to a vehicle suspension control method and an apparatus.

BACKGROUND

In recent years, vehicles are increasingly equipped with vehicle body suspension control systems based on optical sensing such as cameras and lidars, to implement intelligent suspension adjustment under a complex road condition, and ensure that, when a road condition ahead is predicted, the vehicle can pass through an area with an uneven road surface in a most suitable suspension state to ensure stability of a vehicle body. This improves driving safety and ride comfort, and enhances a sense of science and technology of the vehicle.

In an existing suspension control solution, a passive binocular or a lidar is used to identify a road surface condition. This solution is limited in scenarios such as dark light, a road section lacking texture features, and a road surface with frequent unevenness in a small range, and cannot accurately identify the road surface condition. Consequently, accuracy of suspension adjustment is poor, and driving safety and ride comfort are affected.

SUMMARY

Embodiments of this application provide a vehicle suspension control method and an apparatus, to resolve a problem of inaccurate road surface identification in a dark light scenario or in scenarios such as a road section lacking texture features and a road surface with frequent unevenness in a small range, thereby improving accuracy of suspension adjustment, driving safety, and ride comfort.

According to a first aspect, a vehicle suspension control method is provided. The method includes: controlling a vehicle light of a vehicle to project a light spot onto a road surface; obtaining an image of the road surface captured by an image capture apparatus of the vehicle; and controlling a status parameter of a vehicle suspension based on the image.

In the foregoing solution, a road surface condition is detected through cooperation between the vehicle light and the image capture apparatus (that is, the vehicle light of the vehicle is controlled to project the light spot onto the road surface, and the image of the road surface captured by the image capture apparatus of the vehicle is obtained), so that a problem of inaccurate road surface identification in a dark light scenario or in scenarios such as a road section lacking texture features and a road surface with frequent unevenness in a small range can be resolved, thereby improving accuracy of suspension adjustment, driving safety, and ride comfort. In addition, for a vehicle including a vehicle light and a suspension, the foregoing solution may be directly implemented by using software. For example, an original equipment manufacturer (original equipment manufacturer, OEM) manufacturer may deploy related software used to perform the foregoing methods on a control apparatus of the vehicle based on an over-the-air (Over the Air technology, OTA) technology. This can reduce recall costs of the OEM manufacturer, and quickly respond to driving and riding requirements of a user.

In a possible design, a pattern of the light spot includes at least two areas with different brightness. For example, a pattern of a light spot is alternating bright and dark stripes. Correspondingly, the captured image may include structured light information.

In this way, the road surface condition can be detected based on a structured light detection principle, improving reliability of the solution.

In a possible design, before the image of the road surface captured by the image capture apparatus of the vehicle is obtained, the image capture apparatus may be further controlled to capture an image of an area in which the light spot is located on the road surface.

In this way, the image capture apparatus can be controlled, so that the cooperation between the vehicle light and the image capture apparatus is higher, and the reliability of the solution is further improved.

In a possible design, a status of the road surface may be determined based on the image, and the status parameter of the vehicle suspension may be determined based on the status of the road surface. In other words, the status parameter of the vehicle suspension may be associated with the status of the road surface.

In this way, the status of the road surface is first determined based on the image, and then the status parameter of the vehicle suspension is determined based on the status of the road surface. This can improve the reliability of the solution.

In a possible design, the status of the road surface includes a degree of unevenness of the road surface. Certainly, actual application is not limited thereto.

In a possible design, the status parameter of the vehicle suspension includes at least one of a height and damping. Certainly, actual application is not limited thereto.

In a possible design, sensing information may be further obtained, where the sensing information includes a degree of unevenness of the road surface and/or a speed of the vehicle. Controlling the vehicle light of the vehicle to project the light spot onto the road surface includes: A first control module sends a first control signal to the vehicle light, where the first control signal is used to trigger the vehicle light to project a first light spot onto the road surface. Controlling the image capture apparatus to capture the image of the area in which the light spot is located on the road surface includes: A second control module sends a second control signal to the image capture apparatus, where the second control signal is used to trigger the image capture apparatus to capture a first image of the road surface within a time period in which the vehicle light projects the first light spot. Controlling the status parameter of the vehicle suspension based on the image includes: A third control module generates a third control signal based on the first image and sends the third control signal to the vehicle suspension, where the third control signal is used to trigger the vehicle suspension to adjust the status parameter of the vehicle suspension.

In this design manner, control signals are respectively sent to the vehicle light, the image capture apparatus, and the suspension, so that cooperation between the vehicle light, the image capture apparatus, and the suspension can be improved, thereby further improving the reliability of the solution and the accuracy of the suspension adjustment.

In a possible design, the degree of unevenness of the road surface does not exceed a preset density degree and/or the speed of the vehicle does not exceed a preset speed. Controlling the vehicle light of the vehicle to project the light spot onto the road surface further includes: After the third control module sends the third control signal to the vehicle suspension, the first control module sends a fourth control signal to the vehicle light, where the fourth control signal is used to trigger the vehicle light to project a second light spot onto the road surface. Controlling the image capture apparatus to capture the image of the area in which the light spot is located on the road surface further includes: The second control module sends a fifth control signal to the image capture apparatus, where the fifth control signal is used to trigger the image capture apparatus to capture a second image of the road surface within a time period in which the vehicle light projects the second light spot. Controlling the status parameter of the vehicle suspension based on the image further includes: The third control module generates a sixth control signal based on the second image and sends the sixth control signal to the vehicle suspension, where the sixth control signal is used to trigger the vehicle suspension to adjust the status parameter of the vehicle suspension.

In another possible design, the degree of unevenness of the road surface exceeds a preset density degree and/or the speed of the vehicle exceeds a preset speed.

Controlling the vehicle light of the vehicle to project the light spot onto the road surface further includes: After the second control module sends the second control signal to the image capture apparatus and before the third control module sends the third control signal to the vehicle suspension, the first control module sends a fourth control signal to the vehicle light, where the fourth control signal is used to trigger the vehicle light to project a second light spot onto the road surface. Controlling the image capture apparatus to capture the image of the area in which the light spot is located on the road surface further includes: Before the third control module sends the third control signal to the vehicle suspension, the second control module sends a fifth control signal to the image capture apparatus, where the fifth control signal is used to trigger the image capture apparatus to capture a second image of the road surface within a time period in which the vehicle light projects the second light spot. Controlling the status parameter of the vehicle suspension based on the image further includes: After the third control module sends the third control signal to the vehicle suspension, the third control module sends a sixth control signal to the vehicle suspension, where the sixth control signal is generated based on the second image, and the sixth control signal is used to trigger the vehicle suspension to adjust the status parameter of the vehicle suspension.

Alternatively, controlling the vehicle light of the vehicle to project the light spot onto the road surface further includes: After the second control module sends the second control signal to the image capture apparatus and before the third control module sends the third control signal to the vehicle suspension, the first control module sends a fourth control signal to the vehicle light, where the fourth control signal is used to trigger the vehicle light to project a second light spot onto the road surface. Controlling the image capture apparatus to capture the image of the area in which the light spot is located on the road surface further includes: After the third control module sends the third control signal to the vehicle suspension, the second control module sends a fifth control signal to the image capture apparatus, where the fifth control signal is used to trigger the image capture apparatus to capture a second image of the road surface within a time period in which the vehicle light projects the second light spot. Controlling the status parameter of the vehicle suspension based on the image further includes: The third control module sends a sixth control signal to the vehicle suspension, where the sixth control signal is generated based on the second image, and the sixth control signal is used to trigger the vehicle suspension to adjust the status parameter of the vehicle suspension.

In the foregoing two design manners, different control time sequences are used for the vehicle light, the image capture apparatus, and the suspension based on different sensing information, so that the accuracy of the suspension adjustment can be further improved.

In a possible design, the first control signal is used to trigger the vehicle light to continuously project the light spot onto the road surface within preset duration.

In this way, conditional support can be provided for the image capture apparatus to capture a road surface pattern in a long term. In addition, there is no need to frequently send a control signal to the vehicle light, so that control resources can be saved.

In a possible design, the first control module periodically sends the first control signal.

In this way, conditional support can be provided for the image capture apparatus to capture a road surface pattern in a long term.

In a possible design, the second control module may further periodically send the second control signal.

In this way, the road surface pattern can be periodically obtained, and the image has high real-time performance. This helps improve the accuracy of the suspension adjustment.

In a possible design, after the second control module has sent the second control signal for N cycles, the third control module sends the third control signal once, where N is a positive integer. Optionally, a value of N may be related to the speed of the vehicle.

In this way, an adjustment frequency of the vehicle suspension can be controlled as required, improving flexibility of the solution.

In a possible design, the method may further control a status parameter of a vehicle seat based on the image.

In this way, when the vehicle passes through an area with an uneven road surface, the seat can be adjusted to a most suitable state, to ensure ride comfort of a user, and improve a sense of science and technology of the vehicle.

In a possible design, the vehicle light includes a plurality of pixels that can independently control illumination, and a quantity of pixels exceeds a first threshold.

In this way, the vehicle light can emit structured light outward, making the vehicle light project a light spot with bright and dark onto the road surface.

In a possible design, a wavelength of light emitted by the vehicle light ranges from of 390 nm to 780 nm, and the image capture apparatus is a visible light camera. Optionally, controlling the vehicle light of the vehicle to project the light spot onto the road surface may include: controlling the vehicle light to alternately project light spots of different patterns onto the road surface, where a frame rate of the vehicle light exceeds a second threshold.

In this way, the road surface condition can be detected based on visible light, the light spot is imperceptible to human eyes, to improve user experience.

In a possible design, a wavelength of light emitted by the vehicle light is greater than 760 nm, and the image capture apparatus is an infrared camera.

In this way, the road surface condition can be detected based on infrared light, the light spot is imperceptible to human eyes, to improve user experience.

In a possible design, illuminance of light emitted by the vehicle light is less than or equal to 0.1 lux, and the image capture apparatus is a low-light camera.

In this way, the road surface condition can be detected based on low light, the light spot is imperceptible to human eyes, to improve user experience.

Certainly, the foregoing three detection manners are merely examples, and actual application is not limited thereto.

According to a second aspect, a control apparatus is provided, including a module, a unit, or a technical means for implementing the method according to the first aspect or any possible design of the first aspect. For example, the apparatus may include:

a processing module, configured to control a vehicle light of a vehicle to project a light spot onto a road surface; and
a transceiver module, configured to obtain an image of the road surface captured by an image capture apparatus of the vehicle; where
the processing module is further configured to control a status parameter of a vehicle suspension based on the image.

In a possible design, a pattern of the light spot includes at least two areas with different brightness.

In a possible design, the processing module is further configured to control the image capture apparatus to capture an image of an area in which the light spot is located on the road surface.

In a possible design, the image includes structured light information.

In a possible design, when controlling the status parameter of the vehicle suspension based on the image, the processing module is specifically configured to: determine a status of the road surface based on the image, and determine the status parameter of the vehicle suspension based on the status of the road surface.

In a possible design, the status parameter of the vehicle suspension is associated with the status of the road surface, and the status of the road surface includes a degree of unevenness of the road surface.

In a possible design, the status parameter of the vehicle suspension includes at least one of a height and damping.

In a possible design, the transceiver module is further configured to obtain sensing information, where the sensing information includes a degree of unevenness of the road surface and/or a speed of the vehicle. When controlling the vehicle light of the vehicle to project the light spot onto the road surface, the processing module is configured to control the transceiver module to send a first control signal to the vehicle light, where the first control signal is used to trigger the vehicle light to project a first light spot onto the road surface. When controlling the image capture apparatus to capture the image of the area in which the light spot is located on the road surface, the processing module is configured to control the transceiver module to send a second control signal to the image capture apparatus, where the second control signal is used to trigger the image capture apparatus to capture a first image of the road surface within a time period in which the vehicle light projects the first light spot. When controlling the status parameter of the vehicle suspension based on the image, the processing module is configured to: generate a third control signal based on the first image, and control the transceiver module to send the third control signal to the vehicle suspension, where the third control signal is used to trigger the vehicle suspension to adjust the status parameter of the vehicle suspension.

In a possible design, the degree of unevenness of the road surface does not exceed a preset density degree and/or the speed of the vehicle does not exceed a preset speed.

When controlling the vehicle light of the vehicle to project the light spot onto the road surface, the processing module is further configured to: after controlling the transceiver module to send the third control signal to the vehicle suspension, control the transceiver module to send a fourth control signal to the vehicle light, where the fourth control signal is used to trigger the vehicle light to project a second light spot onto the road surface. When controlling the image capture apparatus to capture the image of the area in which the light spot is located on the road surface, the processing module is further configured to: control the transceiver module to send a fifth control signal to the image capture apparatus, where the fifth control signal is used to trigger the image capture apparatus to capture a second image of the road surface within a time period in which the vehicle light projects the second light spot. When controlling the status parameter of the vehicle suspension based on the image, the processing module is further configured to: generate a sixth control signal based on the second image, and control the transceiver module to send the sixth control signal to the vehicle suspension, where the sixth control signal is used to trigger the vehicle suspension to adjust the status parameter of the vehicle suspension.

In a possible design, the degree of unevenness of the road surface exceeds a preset density degree and/or the speed of the vehicle exceeds a preset speed.

When controlling the vehicle light of the vehicle to project the light spot onto the road surface, the processing module is further configured to: after controlling the transceiver module to send the second control signal to the image capture apparatus and before controlling the transceiver module to send the third control signal to the vehicle suspension, control the transceiver module to send a fourth control signal to the vehicle light, where the fourth control signal is used to trigger the vehicle light to project a second light spot onto the road surface. When controlling the image capture apparatus to capture the image of the area in which the light spot is located on the road surface, the processing module is further configured to: before controlling the transceiver module to send the third control signal to the vehicle suspension, control the transceiver module to send a fifth control signal to the image capture apparatus, where the fifth control signal is used to trigger the image capture apparatus to capture a second image of the road surface within a time period in which the vehicle light projects the second light spot. When controlling the status parameter of the vehicle suspension based on the image, the processing module is further configured to: after controlling the transceiver module to send the third control signal to the vehicle suspension, control the transceiver module to send a sixth control signal to the vehicle suspension, where the sixth control signal is generated based on the second image, and the sixth control signal is used to trigger the vehicle suspension to adjust the status parameter of the vehicle suspension.

Alternatively, when controlling the vehicle light of the vehicle to project the light spot onto the road surface, the processing module is further configured to: after controlling the transceiver module to send the second control signal to the image capture apparatus and before controlling the transceiver module to send the third control signal to the vehicle suspension, control the transceiver module to send a fourth control signal to the vehicle light, where the fourth control signal is used to trigger the vehicle light to project a second light spot onto the road surface. When controlling the image capture apparatus to capture the image of the area in which the light spot is located on the road surface, the processing module is further configured to: after controlling the transceiver module to send the third control signal to the vehicle suspension, control the transceiver module to send a fifth control signal to the image capture apparatus, where the fifth control signal is used to trigger the image capture apparatus to capture a second image of the road surface within a time period in which the vehicle light projects the second light spot. When controlling the status parameter of the vehicle suspension based on the image, the processing module is further configured to control the transceiver module to send a sixth control signal to the vehicle suspension, where the sixth control signal is generated based on the second image, and the sixth control signal is used to trigger the vehicle suspension to adjust the status parameter of the vehicle suspension.

In a possible design, the first control signal is used to trigger the vehicle light to continuously project the light spot onto the road surface within preset duration; or the processing module is further configured to control the transceiver module to periodically send the first control signal.

In a possible design, the processing module is further configured to: control the transceiver module to periodically send the second control signal, and after the transceiver module has sent the second control signal for N cycles, control the transceiver module to send the third control signal once, where N is a positive integer.

In a possible design, the processing module is further configured to control a status parameter of a vehicle seat based on the image.

In a possible design, the vehicle light includes a plurality of pixels that can independently control illumination, and a quantity of pixels exceeds a first threshold.

In a possible design, a wavelength of light emitted by the vehicle light ranges from 390 nm to 780 nm, and the image capture apparatus is a visible light camera. When controlling the vehicle light of the vehicle to project the light spot onto the road surface, the processing module is further configured to control the vehicle light to alternately project light spots of different patterns onto the road surface, where a frame rate of the vehicle light exceeds a second threshold.

In a possible design, a wavelength of light emitted by the vehicle light is greater than 760 nm, and the image capture apparatus is an infrared camera; or illuminance of light emitted by the vehicle light is less than or equal to 0.1 lux, and the image capture apparatus is a low-light camera.

According to a third aspect, a control apparatus is provided. The apparatus includes a processor and an interface circuit. The interface circuit is configured to: receive a signal from an apparatus other than the apparatus and transmit the signal to the processor, or send a signal from the processor to a communication apparatus other than the apparatus. The processor is configured to implement the method according to the first aspect or any possible design of the first aspect by using a logic circuit or executing code instructions.

According to a fourth aspect, a computer-readable storage medium is provided, including a program or instructions. When the program or the instructions are run on a computer, the method according to the first aspect or any possible design of the first aspect is performed.

According to a fifth aspect, a program product is provided, including instructions. When the instructions are run on a computer, the method according to the first aspect or any possible design of the first aspect is performed.

According to a sixth aspect, a terminal is provided, including the apparatus according to the second aspect or any one of the possible implementations of the second aspect, the apparatus according to the third aspect, the computer-readable storage medium according to the fourth aspect, or the program product according to the fifth aspect.

Optionally, the terminal is a vehicle.

For beneficial effects of the second aspect to the sixth aspect, refer to descriptions of beneficial effects in the first aspect. Details are not described herein again.

BRIEF DESCRIPTION OF DRAWINGS

FIG. 1 is a diagram of a structure of a vehicle according to an embodiment of this application;
FIG. 2 is a flowchart of a vehicle suspension control method according to an embodiment of this application;
FIG. 3 is an example diagram of a pattern of a light spot;
FIG. 4A to FIG. 4F are diagrams of several possible control time sequences;
FIG. 5 is a diagram of a structure of a control apparatus according to an embodiment of this application; and
FIG. 6 is a diagram of a structure of another control apparatus according to an embodiment of this application.

DESCRIPTION OF EMBODIMENTS

The technical solutions provided in embodiments of this application may be applied to a mobile device with a suspension, for example, a car, a ship, an uncrewed aerial vehicle, a train, a van, or a truck. This is not limited in embodiments of this application. The following is described by using an example in which this application is applied to a car (or referred to as a vehicle).

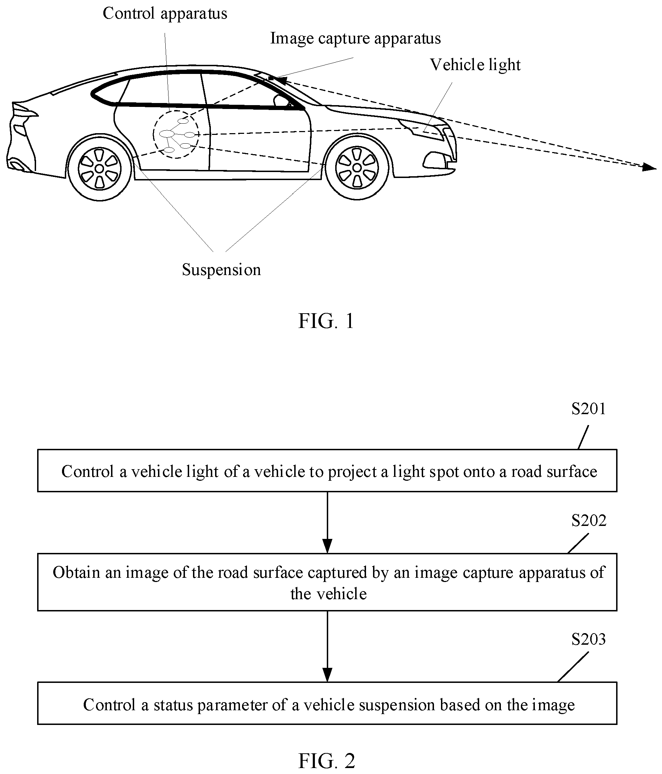

FIG. 1 is a diagram of a structure of a vehicle according to an embodiment of this application. The vehicle may include a vehicle light, an image capture apparatus, a vehicle suspension, and a control apparatus. It may be understood that the vehicle suspension in this specification may also be referred to as a suspension system, a suspension, or the like.

The control apparatus has a control capability. For example, the control apparatus may be connected to another component in the vehicle through a controller area network (controller area network, CAN) bus or in another manner, and send a control signal to the another component, to control operating of the another component. For example, the control apparatus may control the vehicle light to emit light, so that the vehicle light projects a light spot outward, for example, project the light spot onto a road surface. The control apparatus may control the image capture apparatus to capture an image, for example, control the image capture apparatus to capture an image of the road surface within a time period in which the vehicle light projects the light spot onto the road surface. The control apparatus may further control a status parameter (for example, at least one of a height or damping) of the suspension based on the image captured by the image capture apparatus.

In a specific implementation process, the control apparatus may include a plurality of control modules, and different control modules may respectively control different components. For example, a first control module controls the vehicle light to emit light, a second control module controls the image capture apparatus to capture an image, and a third control module controls the status parameter of the suspension. Optionally, the control apparatus may further include a central control module (for example, a fourth control module), configured to coordinate and control cooperation between the first control module, the second control module, the third control module, and the like.

In a specific implementation process, the control modules may be integrated into one component for implementation, or may be distributed in a plurality of components for implementation.

For example, when the first control module, the second control module, the third control module, and the like are integrated into one component for implementation, the component may be an integrated circuit chip, for example, a general-purpose processor, a field programmable gate array (field programmable gate array, FPGA), an application-specific integrated circuit (application-specific integrated circuit, ASIC), a system on a chip (system on a chip, SoC), a network processor (network processor, NP), a digital signal processing circuit (digital signal processor, DSP), a microcontroller unit (microcontroller unit, MCU), a programmable controller (programmable logic device, PLD), or another programmable logic device, a discrete gate or a transistor logic device, a discrete hardware component, or another integrated chip. The component may include a central processing unit (central processing unit, CPU), a neural-network processing unit (neural-network processing unit, NPU), and a graphics processing unit (graphics processing unit, GPU), or may include an application processor (application processor, AP), a modem processor, an image signal processor (image signal processor, ISP), a video codec, a digital signal processor (digital signal processor, DSP), a baseband processor, and/or the like. This is not specifically limited.

For example, when the first control module, the second control module, the third control module, and the like may be distributed in the plurality of components for implementation, the control apparatus may be a distributed controller, and the control apparatus may include a plurality of controllers distributed at different positions of the vehicle. For example, the control apparatus includes one or more of a vehicle body domain controller, a cockpit domain controller, an intelligent driving domain controller, a vehicle control domain controller, a vehicle control unit, and the like.

It may be understood that an example in which the vehicle light is a headlight is used in FIG. 1, and actual application is not limited thereto. For example, the vehicle light may be a taillight, a turn light, or an ambient light. In addition, a position of the image capture apparatus in FIG. 1 is disposed, for example, at the top of a vehicle cabin, and actual application is not limited thereto. The image capture apparatus may be disposed at another position in the vehicle, or disposed outside the vehicle, or the like.

FIG. 1 merely shows some components of the vehicle and may actually further include other components.

FIG. 2 shows a vehicle suspension control method according to an embodiment of this application. The method may be applied to a vehicle (for example, the vehicle shown in FIG. 1). The method includes S201 to S203.

S201: Control a vehicle light of the vehicle to project a light spot onto a road surface.

During specific implementation, the vehicle may control the vehicle light to project the light spot onto the road surface. For example, a control apparatus of the vehicle may send a first control signal to the vehicle light in a wired (for example, a CAN bus) or wireless (for example, Bluetooth or Wi-Fi) manner, to trigger the vehicle light to project the light spot onto the road surface. The control apparatus may be an integrated circuit chip in the vehicle, or may be a distributed controller. For specific implementation, refer to the foregoing related descriptions. Details are not described herein again. In a possible example, the control apparatus may send the first control signal to the vehicle light (specifically, for example, to a controller of the vehicle light (for example, an ECU of the vehicle light)). Specifically, for example, a first control module in the control apparatus sends the first control signal to the vehicle light. After receiving the first control signal, the vehicle light projects the light spot onto the road surface.

In this embodiment of this application, there may be a plurality of implementations in which the vehicle light projects the light spot onto the road surface.

In a possible design, the vehicle light may emit infrared light. For example, a wavelength of light emitted by the vehicle light is greater than 760 nm. Because the infrared light is invisible to human eyes, the light spot can be imperceptible to human eyes in this design manner, to improve user experience.

In another possible design, the vehicle light may emit low light. For example, illuminance of light emitted by the vehicle light is less than or equal to 0.1 lux. In this design manner, the light spot can be imperceptible (or nearly imperceptible) to human eyes, and power consumption of the vehicle can be reduced as well.

In still another possible design, the vehicle light may emit visible light. For example, a wavelength of light emitted by the vehicle light ranges from 390 nm to 780 nm. In this design manner, a visible light emission function originally provided by a general vehicle light can be utilized, to reduce design costs of the vehicle light.

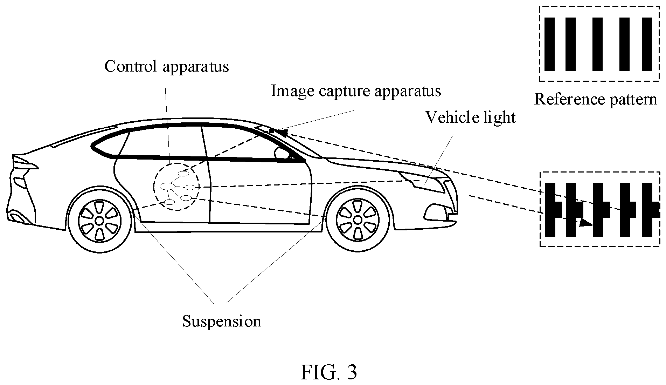

When the vehicle light emits the visible light, the vehicle light may include a plurality of pixels that can independently control illumination, and a quantity of the pixels that can independently control illumination exceeds a first threshold. The first threshold is, for example, 100 (certainly, 100 is merely an example, and actual application is not limited thereto). In this way, the vehicle light can emit structured light outward (that is, an optical characteristic, such as amplitude, intensity, phase, or polarization state, of spatial light distribution can be modulated), so that a pattern of the light spot projected by the vehicle light onto the road surface includes at least two areas with different brightness. As shown in FIG. 3, the pattern of the light spot projected by the vehicle light onto the road surface is a light spot with alternating bright and dark stripes. Certainly, the striped light spot shown in FIG. 3 is merely an example, and an actual light spot pattern is not limited thereto.

Optionally, the control apparatus may further control the vehicle light to alternately project light spots of different patterns onto the road surface, or the controller of the vehicle light controls the vehicle light to alternately project light spots of different patterns onto the road surface. Optionally, a frame rate of the light spot projected by the vehicle light exceeds a second threshold. The second threshold may be related to visual persistence duration of human eyes. For example, the second threshold may be 2(1/t), where t is the visual persistence duration of human eyes. For example, a frame rate of the vehicle light is 48 Hz. In this way, a light spot pattern can be imperceptible to human eyes, to improve user experience.

Certainly, the foregoing three designs are merely examples. During actual application, the vehicle light may be alternatively implemented in another manner.

In this embodiment of this application, the vehicle light may project the structured light onto the road surface based on a specified reference image. A structured light is emitted by the vehicle light based on a pattern of the reference image. After the structured light is projected onto the road surface to form an image on the road surface, the image may be deformed due to impact of unevenness of the road surface, and therefore, a light spot pattern in a pattern captured by an image capture apparatus is deformed to some extent relative to a reference pattern. For example, FIG. 3 shows a possible reference pattern and a light spot pattern imaged on an actual road surface, and in comparison with stripes in the reference image, deformation of stripes in the light spot pattern indicates that the road surface is uneven at a deformation position.

S202: Obtain an image of the road surface captured by the image capture apparatus of the vehicle.

In this embodiment of this application, an optical band detectable by the image capture apparatus matches an optical band emitted by the vehicle light.

Based on the plurality of implementations in which the vehicle light projects the light spot onto the road surface, the image capture apparatus may also be implemented in a plurality of manners.

For example, when the vehicle light emits infrared light, the image capture apparatus may be an infrared camera, and may detect the infrared light. In this way, a road surface image can be captured by using an infrared detection technology, to ensure that the light spot is imperceptible to human eyes while ensuring detection precision.

For example, when the vehicle light emits low light, the image capture apparatus is a low-light camera (or referred to as a high-sensitivity camera), and may detect the low light. In this way, a road surface image can be captured by using a low-light detection technology, to ensure that the light spot is imperceptible to human eyes while ensuring detection precision, and reduce vehicle power consumption.

For example, when the vehicle light may emit visible light, the image capture apparatus is a visible light camera, and may detect the visible light. In this way, a road surface image can be captured based on a visible light camera (for example, a dashcam or a driver monitoring system) originally provided by a common vehicle, so that design costs can be reduced.

In a specific design, a quantity of pixels of the image capture apparatus in any direction (for example, an x direction or a y direction) is greater than a quantity of pixels of the vehicle light in the direction (for example, a quantity of pixels of the image capture apparatus in any direction is at least twice a quantity of pixels of the vehicle light in the direction), and a frame rate of the image captured by the image capture apparatus is greater than or equal to the frame rate of the light spot projected by the vehicle light onto the road surface. In this way, it can be ensured that the image capture apparatus captures a clear image of the light spot imaged on the road surface, to improve reliability of the solution.

In a possible implementation, before the image of the road surface captured by the image capture apparatus is obtained, the vehicle may further control the image capture apparatus to capture an image of an area in which the light spot is located on the road surface. For example, before obtaining the image of the road surface captured by the image capture apparatus of the vehicle, the control apparatus of the vehicle may further send a second control signal to the image capture apparatus (for example, a second control module in the control apparatus sends the second control signal to the image capture apparatus). After receiving the second control signal, the image capture apparatus captures the image of the road surface within a time period in which the vehicle light projects the light spot.

In an alternative implementation, the control apparatus may not control the image capture apparatus to capture the image of the area in which the light spot is located on the road surface, but another apparatus controls the image capture apparatus to capture the image of the area in which the light spot is located on the road surface, or the image capture apparatus is preconfigured to capture the image of the area in which the light spot is located on the road surface (for example, is preconfigured to periodically capture the image of the area in which the light spot is located on the road surface based on a specified time interval).

S203: Control a status parameter of a vehicle suspension (briefly referred to as a suspension) based on the image.

A status of the road surface may include a degree of unevenness of the road surface. Optionally, the status of the road surface may further include a distance, a height, and the like of the road surface relative to the vehicle. The status parameter of the suspension includes at least one of a height, damping, and the like.

Specifically, the status parameter of the suspension is associated with the status of the road surface. For example, the control apparatus of the vehicle may first determine the status of the road surface based on the image, and then determine the status parameter of the suspension based on the status of the road surface. After determining the status parameter of the suspension, the control apparatus may send a third control signal to the suspension (or a controller of the suspension) (for example, a third control module in the control apparatus sends the third control signal to the suspension). The third control signal may indicate a determined status parameter or indicate an adjustment value of the status parameter, making the suspension adjust the status parameter of the suspension based on the third control signal.

In a possible example, the image captured by the image capture apparatus further includes structured light information. The structured light information may be a light spot pattern formed by the structured light projected onto the road surface or a parameter (for example, a shape, a size, or a position) of the light spot pattern.

The control apparatus may compare a captured pattern with the reference pattern, to obtain deformation information (for example, a position variation, a size variation, and a direction variation) of the structured light when the structured light is imaged on the road surface, and further determine the status of the road surface based on the deformation information.

In a possible design, the status parameter of the suspension may be further associated with a speed of the vehicle. For example, the control apparatus may determine the status parameter of the suspension based on the status of the road surface and the speed of the vehicle. Under a same degree of unevenness of a road surface, a higher speed of the vehicle indicates poorer vehicle traveling stability. Therefore, the status parameter of the suspension is adjusted while considering the speed of the vehicle, and accuracy of suspension adjustment can be further improved.

Optionally, when the determined status parameter is the same as a current status parameter of the suspension (or a difference is less than a threshold), the control apparatus may not send the third control signal to the suspension. Alternatively, the control apparatus sends the third control signal to the suspension, but the suspension may not adjust the status parameter based on the third control signal. In this way, unnecessary adjustment can be avoided, and power consumption is reduced.

In the foregoing solutions, the vehicle light and the image capture apparatus are cooperated, so that the status of the road surface can be detected by using the structured light, and the status parameter of the suspension is controlled based on a detection result of the structured light (that is, a vehicle is controlled to project the light spot onto the road surface, and the status parameter of the suspension is controlled based on the image formed by the light spot on the road surface). In this way, a problem of inaccurate road surface identification in a dark light scenario or in scenarios, such as a road section lacking texture features and a road surface with frequent unevenness in a small range, can be resolved (for example, when a degree of unevenness of the road surface is measured, spatial resolution of the structured light is better than that of a radar, and under a dark light condition, a detection capability of the structured light is better than that of passive binocular vision), thereby helping improve the accuracy of suspension adjustment, driving safety, and ride comfort.

In addition, for a vehicle including a vehicle light and a suspension, the foregoing solution may be directly implemented by using software. For example, an original equipment manufacturer (original equipment manufacturer, OEM) manufacturer may deploy related software used to perform the foregoing method steps on the control apparatus of the vehicle based on an over-the-air (Over the Air technology, OTA) technology. This can reduce recall costs of the OEM manufacturer, and quickly respond to driving and riding requirements of a user.

In this embodiment of this application, the control apparatus may send a control signal once to the vehicle light to trigger the vehicle light to project the light spot onto the road surface once, and the control apparatus may send the control signal for a plurality of times to the vehicle light to trigger the vehicle light to project the light spot onto the road surface for a plurality of times; the control apparatus may send a control signal once to the vehicle light to trigger the vehicle light to project the light spot onto the road surface for a plurality of times; or the control apparatus may send a control signal once to the vehicle light to trigger the vehicle light to continuously project the light spot onto the road surface, and the control apparatus may send another control signal to the vehicle light to trigger the vehicle light to stop projecting the light spot.

It may be understood that, in this specification, the vehicle light projecting the light spot onto the road surface once may be that the vehicle light projects a frame of the light spot onto the road surface or that the vehicle light continuously projects a plurality of frames of light spots onto the road surface.

In this embodiment of this application, the control apparatus sends the control signal once to the image capture apparatus to control the image capture apparatus to capture the image once, and the control apparatus may send the control signal for a plurality of times to the image capture apparatus to trigger the image capture apparatus to capture the image a plurality of times; the control apparatus may send the control signal once to the image capture apparatus to trigger the image capture apparatus to capture the image for a plurality of times; or the control apparatus may send the control signal once to the image capture apparatus to trigger the image capture apparatus to continuously capture the image, and the control apparatus may send another control signal to the image capture apparatus to trigger the image capture apparatus to stop capturing the image.

In this embodiment of this application, the control signal (or the status parameter of the suspension) sent by the control apparatus to the suspension may be generated based on one or more images captured by the image capture apparatus. In other words, after controlling the image capture apparatus to capture images N times, the control apparatus may control the suspension to adjust the status parameter once. In other words, the image capture apparatus captures the images N times, and the suspension adjusts the status parameter once, where N is a positive integer.

In a possible design, the vehicle (for example, the control apparatus of the vehicle) may further obtain sensing information, and may perform different control manners on the vehicle light, the image capture apparatus, and the suspension based on different sensing information. The sensing information includes but is not limited to a degree of unevenness of the road surface and/or the speed of the vehicle. It may be understood that an obtained sensing information (for example, a degree of unevenness of the road surface) is used to assist the vehicle in determining a manner of controlling the vehicle light, the image capture apparatus, and the suspension. Therefore, precision of the sensing information may be low. For example, the vehicle may obtain the sensing information by using a binocular camera, a lidar, or the like.

The following provides some possible examples of control manners for the vehicle light, the image capture apparatus, and the suspension.

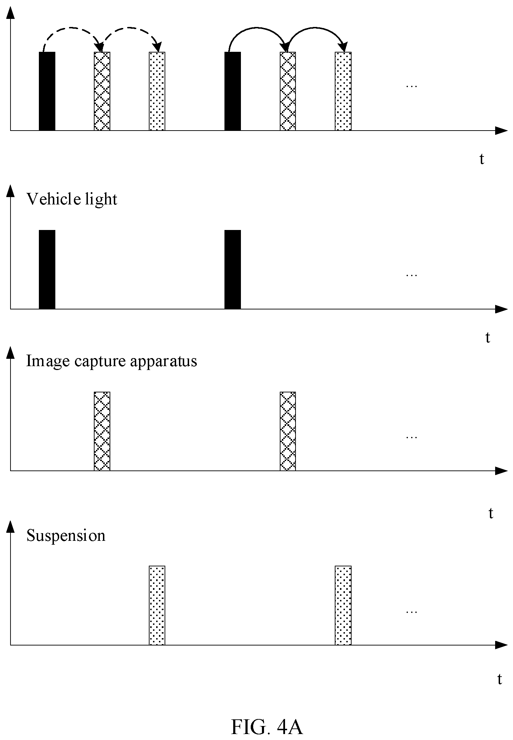

Example 1: Refer to FIG. 4A. When the speed of the vehicle is low and/or unevenness of the road surface is not dense (for example, the speed of the vehicle does not exceed a preset speed and/or the degree of unevenness of the road surface does not exceed a preset density degree), the vehicle (for example, the control apparatus of the vehicle) may sequentially transmit control signals to a light, a camera, and the suspension in a time sequence of "light-camera-suspension-light-camera-suspension...".

For example, first, the first control module sends the first control signal to the vehicle light, and the first control signal triggers the vehicle light to project a first light spot onto the road surface; then, the second control module sends the second control signal to the image capture apparatus, and the second control signal triggers the image capture apparatus to capture a first image of the road surface within a time period in which the vehicle light projects the first light spot; the third control module generates the third control signal based on the first image and sends the third control signal to the suspension, and the third control signal triggers the suspension to adjust the status parameter of the suspension; the first control module further sends a fourth control signal to the vehicle light, and the fourth control signal triggers the vehicle light to project a second light spot onto the road surface; the second control module sends a fifth control signal to the image capture apparatus, and the fifth control signal triggers the image capture apparatus to capture a second image of the road surface within a time period in which the vehicle light projects the second light spot; and then, the third control module generates a sixth control signal based on the second image and sends the sixth control signal to the suspension, and the sixth control signal triggers the suspension to adjust the status parameter of the suspension.

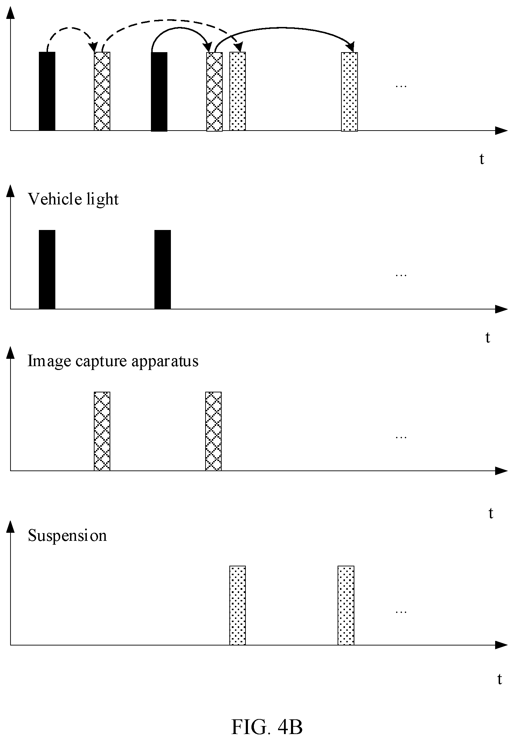

Example 2: Refer to FIG. 4B. When the speed of the vehicle is high and/or unevenness of the road surface is dense (for example, the speed of the vehicle exceeds a preset speed and/or the degree of unevenness of the road surface exceeds a preset density degree), the vehicle (for example, the control apparatus of the vehicle) may sequentially transmit control signals to a light, a camera, and the suspension in a time sequence of "light-camera-light-camera-suspension-suspension...".

For example, first, the first control module sends the first control signal to the vehicle light, and the first control signal triggers the vehicle light to project a first light spot onto the road surface; then, the second control module sends the second control signal to the image capture apparatus, and the second control signal triggers the image capture apparatus to capture a first image of the road surface within a time period in which the vehicle light projects the first light spot; the first control module further sends a fourth control signal to the vehicle light, and the fourth control signal triggers the vehicle light to project a second light spot onto the road surface; the second control module sends a fifth control signal to the image capture apparatus, and the fifth control signal triggers the image capture apparatus to capture a second image of the road surface within a time period in which the vehicle light projects the second light spot; the third control module generates the third control signal based on the first image and sends the third control signal to the suspension, and the third control signal triggers the suspension to adjust the status parameter of the suspension; and then, the third control module generates a sixth control signal based on the second image and sends the sixth control signal to the suspension, and the sixth control signal triggers the suspension to adjust the status parameter of the suspension.

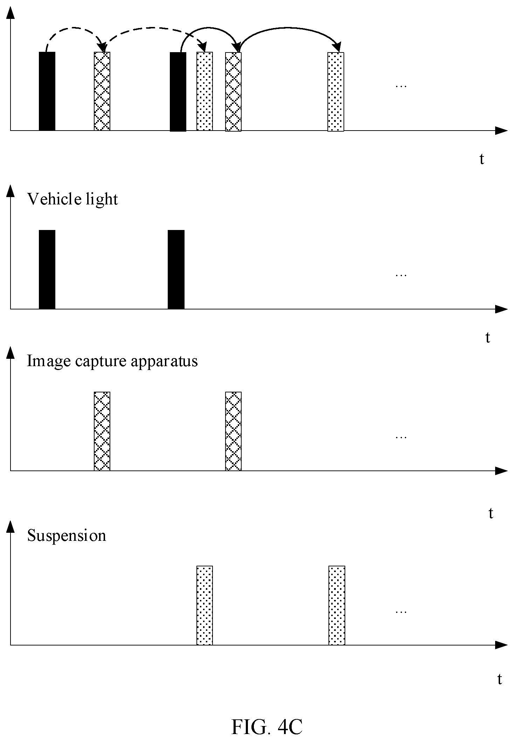

Example 3: Refer to FIG. 4C. When the speed of the vehicle is high and/or unevenness of the road surface is dense (for example, the speed of the vehicle exceeds a preset speed and/or the degree of unevenness of the road surface exceeds a preset density degree), the vehicle (for example, the control apparatus of the vehicle) may sequentially transmit control signals to a light, a camera, and the suspension in a time sequence of "light-camera-light-suspension-camera-suspension...".

For example, first, the first control module sends the first control signal to the vehicle light, and the first control signal triggers the vehicle light to project a first light spot onto the road surface; then, the second control module sends the second control signal to the image capture apparatus, and the second control signal triggers the image capture apparatus to capture a first image of the road surface within a time period in which the vehicle light projects the first light spot; the first control module further sends a fourth control signal to the vehicle light, and the fourth control signal triggers the vehicle light to project a second light spot onto the road surface; the third control module generates the third control signal based on the first image and sends the third control signal to the suspension, and the third control signal triggers the suspension to adjust the status parameter of the suspension; the second control module sends a fifth control signal to the image capture apparatus, and the fifth control signal triggers the image capture apparatus to capture a second image of the road surface within a time period in which the vehicle light projects the second light spot; and then, the third control module generates a sixth control signal based on the second image and sends the sixth control signal to the suspension, and the sixth control signal triggers the suspension to adjust the status parameter of the suspension.

It may be understood that, in the examples provided in FIG. 4A to FIG. 4C, an example in which each time the vehicle light projects the light spot, the image capture apparatus captures the image once, and the suspension adjusts the status parameter once is used. However, actual application is not limited thereto. For example, Example 4 and Example 5 provide another two possibilities.

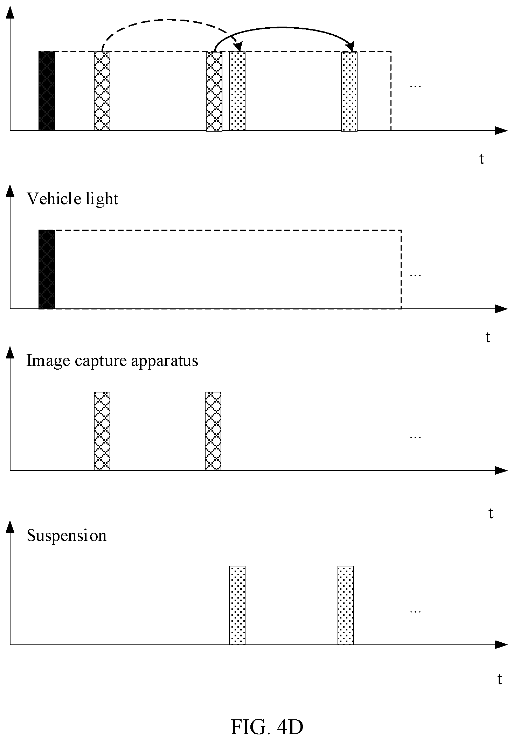

Example 4: The vehicle light continuously projects the light spot onto the road surface. For example, the control apparatus sends the control signal once to the vehicle light to trigger the vehicle light to continuously project the light spot onto the road surface. Each time the control apparatus controls the image capture apparatus to capture the image, the control apparatus controls the suspension to adjust the status parameter once. As shown in FIG. 4D, a dashed box in FIG. 4D indicates duration of effect of one control signal sent by the control apparatus to vehicle light on the vehicle light. Although the control apparatus does not send the control signal to the vehicle light within a latter part of the duration, the vehicle light still projects the light spot onto the road surface.

For example, the first control module sends the first control signal to the vehicle light, and the first control signal is used to trigger the vehicle light to continuously project the light spot onto the road surface within preset duration; within the preset duration, the second control module sends the second control signal to the image capture apparatus, and the second control signal triggers the image capture apparatus to capture a first image of the road surface; then, the third control module generates the third control signal based on the first image and sends the third control signal to the suspension, and the third control signal triggers the suspension to adjust the status parameter of the suspension; the second control module further sends a fifth control signal to the image capture apparatus, and the fifth control signal triggers the image capture apparatus to capture a second image of the road surface; and then, the third control module generates a sixth control signal based on the second image and sends the sixth control signal to the suspension, and the sixth control signal triggers the suspension to adjust the status parameter of the suspension.

Example 5: The vehicle light periodically projects the light spot onto the road surface. For example, the control apparatus sends the control signal once to the vehicle light, and the control signal triggers the vehicle light to periodically project the light spot onto the road surface; or the control apparatus periodically sends the control signal to the vehicle light to periodically trigger the vehicle light to project the light spot onto the road surface. The control apparatus may send the control signal to the image capture apparatus to trigger the image capture apparatus to capture the image as required, and send the control signal to the suspension to trigger the suspension to adjust the status parameter.

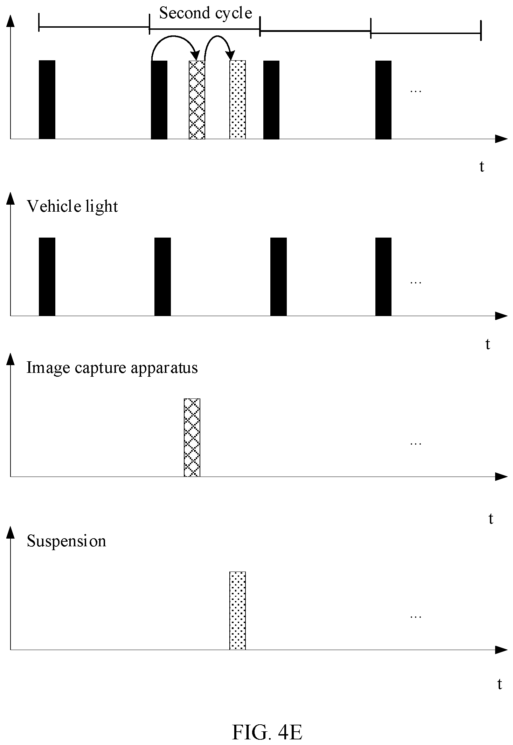

For example, FIG. 4E shows that the control apparatus periodically sends the control signal to the vehicle light, to periodically trigger the vehicle light to project the light spot onto the road surface. FIG. 4E shows four cycles. During a second cycle, the control apparatus sends the control signal to the image capture apparatus and sends the control signal to the suspension.

Example 6: In a scenario in which the vehicle is stationary or in low-speed, after the image capture apparatus captures images for a plurality of times, the vehicle (for example, the control apparatus of the vehicle) controls the suspension to adjust the status parameter once.

For example, the control apparatus may periodically send the control signal to the image capture apparatus (for example, the second control module periodically sends the second control signal to the image capture apparatus), and after the control apparatus has sent the control signal to the image capture apparatus for N cycles, the control apparatus sends the control signal (for example, the third control signal) once to the suspension, where N is a positive integer. A value of N may be related to the speed of the vehicle. For example, a lower speed of the vehicle indicates a larger value of N.

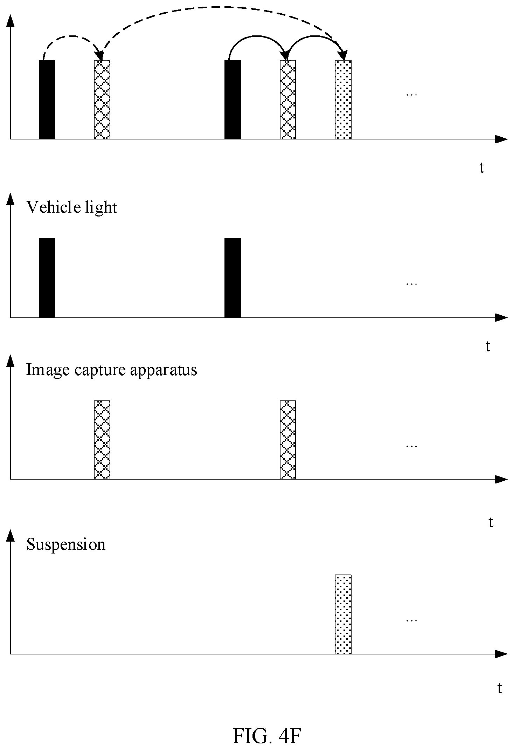

For example, FIG. 4F shows that after controlling the image capture apparatus to capture images twice, the control apparatus controls the suspension to adjust the status parameter once.

It may be understood that FIG. 4A to FIG. 4F are merely some possible examples of this embodiment of this application, and actual application is not limited thereto.

In a possible design, the vehicle (for example, the control apparatus of the vehicle) may further indicate one duration (referred to as waiting duration below) to the suspension. After receiving the control signal (for example, the third control signal), the suspension adjusts the status parameter of the suspension after waiting for the duration. For example, the control signal sent by the control apparatus to the suspension includes the waiting duration.

For example, that the control apparatus generates the third control signal based on the image may include: determining the status parameter of the suspension based on the image; determining the waiting duration based on the speed of the vehicle and a distance between the vehicle and a projection position of the light spot; and generating the third control signal based on an adjustment value of the status parameter and the waiting duration.

The waiting duration may be related to the speed of the vehicle and the distance between the vehicle and the projection position of the light spot. For example, the following relationship is satisfied:

$$L/v = Tcal + Tdel + Tadj$$

Tdel represents waiting duration, v represents a speed of the vehicle, L represents a distance between the vehicle and a projection position of the light spot, Tcal is duration required for the control apparatus to calculate and transmit the third control signal, and Tadj is duration required for the suspension to adjust the status parameter of the suspension.

It may be understood that the foregoing formula is merely an example, and impact of additional factors may be further considered during actual setting of wait duration.

In the foregoing design manner, the waiting duration is set to ensure that the suspension adjusts the status parameter of the suspension to a status parameter that matches a status of the road surface at each position the vehicle travels on, so that premature or delayed adjustment is avoided, and driving safety and ride comfort are further improved.

In a possible design, the vehicle (for example, the control apparatus of the vehicle) may further control a status parameter of a vehicle seat based on the image captured by the image capture apparatus. The status parameter of the vehicle seat includes, for example, but is not limited to, at least one of a height, a distance to a brake pedal (an accelerator pedal, a steering wheel, or the like), a tilt angle of a backrest.

Similarly, the status parameter of the vehicle seat may be associated with the status of the road surface. The control apparatus may first determine the status of the road surface based on the image, and then determine the status parameter of the vehicle seat based on the status of the road surface. Similarly, the status parameter of the seat may also be related to the speed of the vehicle.

It may be understood that the status of the road surface based on which the control apparatus determines the status parameter of the vehicle seat and the status of the road surface based on which the control apparatus determines the status parameter of the suspension may be a status of the road surface determined based on a same image, and an operation for determining the status of the road surface may be performed only once. In other words, after determining the status of the road surface based on the image, the control apparatus may simultaneously control the status parameter of the vehicle suspension and the status parameter of the vehicle seat based on the status of the road surface. Certainly, the control apparatus may alternatively separately determine a status of the road surface based on different images, and control the status parameter of the vehicle suspension and the status parameter of the vehicle seat.

In this design manner, when the vehicle passes through an area with an uneven road surface, the seat can be adjusted to a most suitable state, to ensure ride comfort of the user, and improve a sense of science and technology of the vehicle.

Certainly, the vehicle may further adjust a status parameter of another component of the vehicle based on the image captured by the image capture apparatus. For a specific implementation, refer to an adjustment manner of the suspension. Details are not described herein again.

It may be understood that the foregoing implementations may be separately implemented, or may be implemented in combination with each other. This is not limited.

Based on a same technical idea, an embodiment of this application provides a control apparatus. The apparatus includes a module/unit/mean for performing the method in the foregoing method embodiment. The module/unit/mean may be implemented by software, may be implemented by hardware, or may be implemented by hardware executing corresponding software.

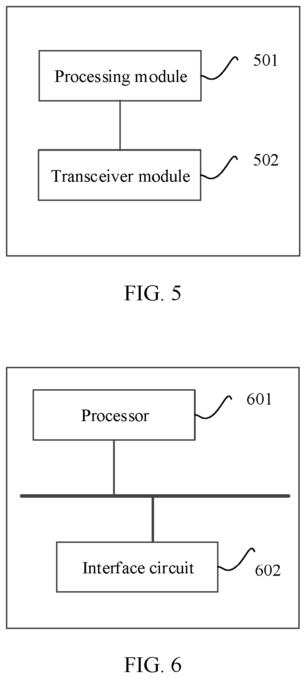

Refer to FIG. 5. The apparatus may include a processing module 501 and a transceiver module 502. The processing module 501 is configured to control a vehicle light of a vehicle to project a light spot onto a road surface. The transceiver module 502 is configured to obtain an image of the road surface captured by an image capture apparatus of the vehicle. The processing module 501 is further configured to control a status parameter of a vehicle suspension based on the image.

It should be understood that all related content of the steps in the foregoing method embodiment may be cited in function descriptions of corresponding functional modules. Details are not described herein again.

During specific implementation, the apparatus may have a plurality of product forms. The following describes several possible product forms.

Refer to FIG. 6. An embodiment of this application further provides a control apparatus. The apparatus includes at least one processor 601 and an interface circuit 602. The interface circuit 602 is configured to: receive a signal from an apparatus other than the apparatus and transmit the signal to the processor 601, or send a signal from the processor 601 to a communications apparatus other than the apparatus. The processor 601 is configured to implement the method steps in the foregoing method embodiments by using a logic circuit or executing code instructions.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through an example rather than a limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but is not limited to these memories and any memory of another proper type.

Based on a same technical idea, an embodiment of this application further provides a computer-readable storage medium, including a program or instructions. When the program or the instructions are run on a computer, the method steps in the foregoing method embodiment is performed.

Based on a same technical idea, an embodiment of this application further provides a computer program product including instructions. The computer program product stores the instructions. When the instructions are run on a computer, the method steps in the foregoing method embodiment is performed.

Based on a same technical idea, an embodiment of this application further provides a terminal, including any apparatus described above.

Optionally, the terminal may be deployed on any device, for example, a vehicle, a ship, an airplane, an uncrewed aerial vehicle, or a smart home device, may be deployed on a roadside, or may be deployed on a building. This is not limited in this application.

Optionally, the terminal is a vehicle.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

**Claims**

1. A vehicle suspension control method, comprising:

   controlling a vehicle light of a vehicle to project a light spot onto a road surface;
   obtaining an image of the road surface captured by an image capture apparatus of the vehicle; and
   controlling a status parameter of the vehicle suspension based on the image.

2. The method according to claim 1, wherein
   a pattern of the light spot comprises at least two areas with different brightness.

3. The method according to claim 1 or 2, wherein before obtaining the image of the road surface captured by the image capture apparatus of the vehicle, further comprising:
   controlling the image capture apparatus to capture an image of an area in which the light spot is located on the road surface.

4. The method according to claim 3, wherein the image comprises structured light information.

5. The method according to any one of claims 1 to 4, wherein controlling the status parameter of the vehicle suspension based on the image comprises:

   determining a status of the road surface based on the image; and

   determining the status parameter of the vehicle suspension based on the status of the road surface.

6. The method according to claim 5, wherein the status parameter of the vehicle suspension is associated with the status of the road surface, and the status of the road surface comprises a degree of unevenness of the road surface.

7. The method according to any one of claims 1 to 6, wherein the status parameter of the vehicle suspension comprises at least one of a height and damping.

8. The method according to claim 3, wherein the method further comprises:

   obtaining sensing information, wherein the sensing information comprises a degree of unevenness of the road surface and/or a speed of the vehicle;
   controlling the vehicle light of the vehicle to project the light spot onto the road surface comprises:

      sending, by a first control module, a first control signal to the vehicle light, wherein the first control signal is used to trigger the vehicle light to project a first light spot onto the road surface;
   controlling the image capture apparatus to capture the image of the area in which the light spot is located on the road surface comprises:

      sending, by a second control module, a second control signal to the image capture apparatus, wherein the second control signal is used to trigger the image capture apparatus to capture a first image of the road surface within a time period in which the vehicle light projects the first light spot; and
      controlling the status parameter of the vehicle suspension based on the image comprises:
      generating, by a third control module, a third control signal based on the first image, and sending the third control signal to the vehicle suspension, wherein the third control signal is used to trigger the vehicle suspension to adjust the status parameter of the vehicle suspension.

9. The method according to claim 8, wherein the degree of unevenness of the road surface does not exceed a preset density degree and/or the speed of the vehicle does not exceed a preset speed;
controlling the vehicle light of the vehicle to project the light spot onto the road surface further comprises:

> after the third control module sends the third control signal to the vehicle suspension, sending, by the first control module, a fourth control signal to the vehicle light, wherein the fourth control signal is used to trigger the vehicle light to project a second light spot onto the road surface;
> controlling the image capture apparatus to capture the image of the area in which the light spot is located on the road surface further comprises:
>
> > sending, by the second control module, a fifth control signal to the image capture apparatus, wherein the fifth control signal is used to trigger the image capture apparatus to capture a second image of the road surface within a time period in which the vehicle light projects the second light spot; and
> > controlling the status parameter of the vehicle suspension based on the image further comprises:
> > generating, by the third control module, a sixth control signal based on the second image, and sending the sixth control signal to the vehicle suspension, wherein the sixth control signal is used to trigger the vehicle suspension to adjust the status parameter of the vehicle suspension.

10. The method according to claim 8, wherein the degree of unevenness of the road surface exceeds a preset density degree and/or the speed of the vehicle exceeds a preset speed;
controlling the vehicle light of the vehicle to project the light spot onto the road surface further comprises:

> after the second control module sends the second control signal to the image capture apparatus and before the third control module sends the third control signal to the vehicle suspension, sending, by the first control module, a fourth control signal to the vehicle light, wherein the fourth control signal is used to trigger the vehicle light to project a second light spot onto the road surface;
> controlling the image capture apparatus to capture the image of the area in which the light spot is located on the road surface further comprises:
>
> > before the third control module sends the third control signal to the vehicle suspension, sending, by the second control mod-

ule, a fifth control signal to the image capture apparatus, wherein the fifth control signal is used to trigger the image capture apparatus to capture a second image of the road surface within a time period in which the vehicle light projects the second light spot; and
controlling the status parameter of the vehicle suspension based on the image further comprises:
after the third control module sends the third control signal to the vehicle suspension, sending, by the third control module, a sixth control signal to the vehicle suspension, wherein the sixth control signal is generated based on the second image, and the sixth control signal is used to trigger the vehicle suspension to adjust the status parameter of the vehicle suspension.

11. The method according to claim 8, wherein the degree of unevenness of the road surface exceeds a preset density degree and/or the speed of the vehicle exceeds a preset speed;
controlling the vehicle light of the vehicle to project the light spot onto the road surface further comprises:

> after the second control module sends the second control signal to the image capture apparatus and before the third control module sends the third control signal to the vehicle suspension, sending, by the first control module, a fourth control signal to the vehicle light, wherein the fourth control signal is used to trigger the vehicle light to project a second light spot onto the road surface;
> controlling the image capture apparatus to capture the image of the area in which the light spot is located on the road surface further comprises:
>
> > after the third control module sends the third control signal to the vehicle suspension, sending, by the second control module, a fifth control signal to the image capture apparatus, wherein the fifth control signal is used to trigger the image capture apparatus to capture a second image of the road surface within a time period in which the vehicle light projects the second light spot; and
> > controlling the status parameter of the vehicle suspension based on the image further comprises:
> > sending, by the third control module, a sixth control signal to the vehicle suspension, wherein the sixth control signal is generated based on the second image, and the sixth control signal is used to trigger the vehicle suspension to adjust the status parameter of the vehicle suspension.

12. The method according to claim 8, wherein

the first control signal is used to trigger the vehicle light to continuously project the light spot onto the road surface within preset duration; or;
the method further comprises: periodically sending, by the first control module, the first control signal.

13. The method according to claim 8, wherein the method further comprises:

periodically sending, by the second control module, the second control signal; and
after the second control module has sent the second control signal for N cycles, sending, by the third control module, the third control signal once, wherein N is a positive integer.

14. The method according to any one of claims 1 to 13, wherein the method further comprises:
controlling a status parameter of a vehicle seat based on the image.

15. The method according to any one of claims 1 to 14, wherein
the vehicle light comprises a plurality of pixels that are capable of independently controlling illumination, and a quantity of pixels exceeds a first threshold.

16. The method according to any one of claims 1 to 15, wherein a wavelength of light emitted by the vehicle light ranges from 390 nm to 780 nm, and the image capture apparatus is a visible light camera; and controlling the vehicle light of the vehicle to project the light spot onto the road surface comprises:

controlling the vehicle light to alternately project light spots of different patterns onto the road surface; wherein
a frame rate of the vehicle light exceeds a second threshold.

17. The method according to any one of claims 1 to 15, wherein a wavelength of light emitted by the vehicle light is greater than 760 nm, and the image capture apparatus is an infrared camera; or illuminance of light emitted by the vehicle light is less than or equal to 0.1 lux, and the image capture apparatus is a low-light camera.

18. A control apparatus, comprising:

a processing module, configured to control a vehicle light of a vehicle to project a light spot onto a road surface; and
a transceiver module, configured to obtain an image of the road surface captured by an image capture apparatus of the vehicle; wherein the processing module is further configured to control a status parameter of a vehicle suspension based on the image.

19. The apparatus according to claim 18, wherein the processing module is further configured to control the image capture apparatus to capture an image of an area in which the light spot is located on the road surface.

20. The apparatus according to claim 18 or 19, wherein when controlling the status parameter of the vehicle suspension based on the image, the processing module is specifically configured to: determine a status of the road surface based on the image, and determine the status parameter of the vehicle suspension based on the status of the road surface.

21. The apparatus according to claim 19, wherein the transceiver module is further configured to obtain sensing information, wherein the sensing information comprises a degree of unevenness of the road surface and/or a speed of the vehicle;

when controlling the vehicle light of the vehicle to project the light spot onto the road surface, the processing module is configured to control the transceiver module to send a first control signal to the vehicle light, wherein the first control signal is used to trigger the vehicle light to project a first light spot onto the road surface;
when controlling the image capture apparatus to capture the image of the area in which the light spot is located on the road surface, the processing module is configured to control the transceiver module to send a second control signal to the image capture apparatus, wherein the second control signal is used to trigger the image capture apparatus to capture a first image of the road surface within a time period in which the vehicle light projects the first light spot; and
when controlling the status parameter of the vehicle suspension based on the image, the processing module is configured to: generate a third control signal based on the first image, and control the transceiver module to send the third control signal to the vehicle suspension, wherein the third control signal is used to trigger the vehicle suspension to adjust the status parameter of the vehicle suspension.

22. The apparatus according to claim 21, wherein the degree of unevenness of the road surface does not exceed a preset density degree and/or the speed of the vehicle does not exceed a preset speed;

when controlling the vehicle light of the vehicle to project the light spot onto the road surface, the processing module is further configured to: after controlling the transceiver module to send the third control signal to the vehicle suspension, control the transceiver module to send a fourth control signal to the vehicle light, wherein the fourth control signal is used to trigger the vehicle light to project a second light spot onto the road surface;

when controlling the image capture apparatus to capture the image of the area in which the light spot is located on the road surface, the processing module is further configured to control the transceiver module to send a fifth control signal to the image capture apparatus, wherein the fifth control signal is used to trigger the image capture apparatus to capture a second image of the road surface within a time period in which the vehicle light projects the second light spot; and when controlling the status parameter of the vehicle suspension based on the image, the processing module is further configured to: generate a sixth control signal based on the second image, and control the transceiver module to send the sixth control signal to the vehicle suspension, wherein the sixth control signal is used to trigger the vehicle suspension to adjust the status parameter of the vehicle suspension.

23. The apparatus according to claim 21, wherein the degree of unevenness of the road surface exceeds a preset density degree and/or the speed of the vehicle exceeds a preset speed;

when controlling the vehicle light of the vehicle to project the light spot onto the road surface, the processing module is further configured to: after controlling the transceiver module to send the second control signal to the image capture apparatus and before controlling the transceiver module to send the third control signal to the vehicle suspension, control the transceiver module to send a fourth control signal to the vehicle light, wherein the fourth control signal is used to trigger the vehicle light to project a second light spot onto the road surface;

when controlling the image capture apparatus to capture the image of the area in which the light spot is located on the road surface, the processing module is further configured to: before controlling the transceiver module to send the third control signal to the vehicle suspension, control the transceiver module to send a fifth control signal to the image capture apparatus, wherein the fifth control signal is used to trigger the image capture apparatus to capture a second image of the road surface within a time period in which the vehicle light projects the second light spot; and when controlling the status parameter of the vehicle suspension based on the image, the processing module is further configured to: after controlling the transceiver module to send the third control signal to the vehicle suspension, control the transceiver module to send a sixth control signal to the vehicle suspension, wherein the sixth control signal is generated based on the second image, and the sixth control signal is used to trigger the vehicle suspension to adjust the status parameter of the vehicle suspension.

24. The apparatus according to claim 21, wherein the degree of unevenness of the road surface exceeds a preset density degree and/or the speed of the vehicle exceeds a preset speed;

when controlling the vehicle light of the vehicle to project the light spot onto the road surface, the processing module is further configured to: after controlling the transceiver module to send the second control signal to the image capture apparatus and before controlling the transceiver module to send the third control signal to the vehicle suspension, control the transceiver module to send a fourth control signal to the vehicle light, wherein the fourth control signal is used to trigger the vehicle light to project a second light spot onto the road surface;

when controlling the image capture apparatus to capture the image of the area in which the light spot is located on the road surface, the processing module is further configured to: after controlling the transceiver module to send the third control signal to the vehicle suspension, control the transceiver module to send a fifth control signal to the image capture apparatus, wherein the fifth control signal is used to trigger the image capture apparatus to capture a second image of the road surface within a time period in which the vehicle light projects the second light spot; and when controlling the status parameter of the vehicle suspension based on the image, the processing module is further configured to control the transceiver module to send a sixth control signal to the vehicle suspension, wherein the sixth control signal is generated based on the second image, and the sixth control signal is used to trigger the vehicle suspension to adjust the status parameter of the vehicle suspension.

25. The apparatus according to claim 21, wherein

the first control signal is used to trigger the vehicle light to continuously project the light spot onto the road surface within preset duration; or;

the processing module is further configured to control the transceiver module to periodically send the first control signal.

26. The apparatus according to claim 21, wherein the processing module is further configured to: control the transceiver module to periodically send the second control signal; and

after the transceiver module has sent the second control signal for N cycles, control the transceiver module to send the third control signal once, wherein N is a positive integer.

27. The apparatus according to any one of claims 18 to 26, wherein the processing module is further configured to:

control a status parameter of a vehicle seat based on the image.

28. The apparatus according to any one of claims 18 to 27, wherein a wavelength of light emitted by the vehicle light ranges from 390 nm to 780 nm, and the image capture apparatus is a visible light camera; and

when controlling the vehicle light of the vehicle to project the light spot onto the road surface, the processing module is further configured to control the vehicle light to alternately project light spots of different patterns onto the road surface; wherein

a frame rate of the vehicle light exceeds a second threshold.

29. A control apparatus, wherein the apparatus comprises a processor and an interface circuit, the interface circuit is configured to: receive a signal from an apparatus other than the apparatus and transmit the signal to the processor, or send a signal from the processor to a communication apparatus other than the apparatus, and the processor is configured to implement the method according to any one of claims 1 to 17 by using a logic circuit or executing code instructions.

30. A computer-readable storage medium, comprising a program or instructions, wherein when the program or the instruction are run on a computer, the method according to any one of claims 1 to 17 is performed.

31. A terminal, comprising the apparatus according to any one of claims 18 to 28, the apparatus according to claim 29, or the computer-readable storage medium according to claim 30.

32. The terminal according to claim 31, wherein the terminal is a vehicle.

Control apparatus

Image capture apparatus

Vehicle light

Suspension

FIG. 1

S201

Control a vehicle light of a vehicle to project a light spot onto a road surface

S202

Obtain an image of the road surface captured by an image capture apparatus of the vehicle

S203

Control a status parameter of a vehicle suspension based on the image

FIG. 2

FIG. 3

FIG. 4A

FIG. 4B

Vehicle light

Image capture apparatus

Suspension

FIG. 4C

Vehicle light

Image capture apparatus

Suspension

FIG. 4D

Second cycle

Vehicle light

...

Image capture apparatus

...

Suspension

...

FIG. 4E

Vehicle light

Image capture apparatus

Suspension

FIG. 4F

Processing module ⌇ 501

Transceiver module ⌇ 502

FIG. 5

Processor ⌇ 601

Interface circuit ⌇ 602

FIG. 6

## INTERNATIONAL SEARCH REPORT

| International application No. |
|---|
| **PCT/CN2024/123485** |

**A. CLASSIFICATION OF SUBJECT MATTER**

B60G17/015(2006.01)i

According to International Patent Classification (IPC) or to both national classification and IPC

**B. FIELDS SEARCHED**

Minimum documentation searched (classification system followed by classification symbols)

IPC:B60G

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 凹凸, 不同, 采集, 车灯, 车速, 灯光, 调, 发射, 光斑, 光点, 光线, 光源, 交替, 控制, 路, 频率, 起伏, 人眼, 识别, 速度, 锁定, 图案, 图片, 图像, 图形, 无感, 悬架, 预定, 预设, 预先, 照片, 照射, 照相, 阈, adjust+, light+, picture+, modif+, snapshot+, velocit+, pavement+, regulat+, fluctuation+, speed+, control+, image+, photograph+, suspension+, road+.

**C. DOCUMENTS CONSIDERED TO BE RELEVANT**

| Category* | Citation of document, with indication, where appropriate, of the relevant passages | Relevant to claim No. |
|---|---|---|
| X | US 2016034771 A1 (TK HOLDINGS INC. et al.) 04 February 2016 (2016-02-04) description, paragraphs 119-268, and figures 1-94 | 1-8, 12-15, 17-21, 25-27, 29-32 |
| Y | US 2016034771 A1 (TK HOLDINGS INC. et al.) 04 February 2016 (2016-02-04) description, paragraphs 119-268, and figures 1-94 | 16, 28 |
| Y | CN 116893404 A (HELLA GMBH & CO. KGAA) 17 October 2023 (2023-10-17) description, paragraphs 23-34, and figures 1-2 | 16, 28 |
| X | KR 20140030632 A (KOREA ADVANCED INSTITUTE OF SCIENCE AND TECHNOLOGY) 12 March 2014 (2014-03-12) description, paragraphs 7-107, and figures 1-9 | 1, 3-8, 12-15, 17-21, 25-27, 29-32 |
| A | CN 115984814 A (YUEXIANG XIONG'AN SCIENCE AND TECHNOLOGY CO., LTD.) 18 April 2023 (2023-04-18) entire document | 1-32 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2024** | **06 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/123485** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 116674333 A (CHENGDU SAILISI TECHNOLOGY CO., LTD.) 01 September 2023 (2023-09-01)<br>    entire document | 1-32 |

Form PCT/ISA/210 (second sheet) (July 2022)

**INTERNATIONAL SEARCH REPORT**
Information on patent family members

International application No.

**PCT/CN2024/123485**

| Patent document cited in search report | | | Publication date (day/month/year) | Patent family member(s) | | | Publication date (day/month/year) |
|---|---|---|---|---|---|---|---|
| US | 2016034771 | A1 | 04 February 2016 | US | 10083361 | B2 | 25 September 2018 |
| | | | | US | 2020065594 | A1 | 27 February 2020 |
| | | | | US | 10719723 | B2 | 21 July 2020 |
| | | | | WO | 2014152470 | A2 | 25 September 2014 |
| | | | | WO | 2014152470 | A3 | 02 July 2015 |
| CN | 116893404 | A | 17 October 2023 | US | 2023311741 | A1 | 05 October 2023 |
| | | | | DE | 102022107950 | A1 | 05 October 2023 |
| KR | 20140030632 | A | 12 March 2014 | KR | 101377204 | B1 | 01 April 2014 |
| CN | 115984814 | A | 18 April 2023 | | None | | |
| CN | 116674333 | A | 01 September 2023 | CN | 116674333 | B | 29 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311398912